Europäisches Patentamt

European Patent Office

Office européen des brevets

(11) Numéro de publication: **0 237 685**

**A1**

# DEMANDE DE BREVET EUROPEEN

(21) Numéro de dépôt: 86400555.8

(22) Date de dépôt: **17.03.86**

(51) Int. Cl.⁴: **B01D 53/04** , B01J 20/34 , C01B 31/08

(43) Date de publication de la demande:
**23.09.87 Bulletin 87/39**

(84) Etats contractants désignés:
**AT BE CH DE FR GB IT LI LU NL SE**

(71) Demandeur: **T.G.I. Traitement de Gaz et Génie Industriel**
**284 rue de la Garenne**
**F-92003 Nanterre(FR)**

(72) Inventeur: **Naud, Michel**
**60, Avenue de Gatines**
**F-78370 Maurepas(FR)**

(74) Mandataire: **Combe, André et al**
**CABINET BEAU DE LOMENIE 55, rue d'Amsterdam**
**F-75008 Paris(FR)**

(54) **Dispositif perfectionné de désorption de charbon actif.**

(57) La présente invention concerne un dispositif perfectionné de traitement de charbon actif comportant un appareil de désorption (4), un condenseur (6), un décanteur (8), un dispositif de recirculation de l'eau provenant dudit décanteur, impliquant l'introduction de ladite eau dans ledit condenseur et l'aspiration de la vapeur produite dans ledit condenseur au moyen d'un thermocompresseur (2) avec introduction de ladite vapeur dans l'appareil de désorption (4), ledit dispositif étant caractérisé en ce qu'il comporte un second thermocompresseur (11-18) alimenté en vapeur à partir de la chaudière (1) fournissant ladite vapeur et qui est branché sur un condenseur (6-17) et qui débite sur l'aspiration dudit thermocompresseur (2), ledit second thermocompresseur pouvant être court-circuité au cours d'une phase de l'opération de désorption.

Fig. 2

## Dispositif perfectionné de désorption de charbon actif.

La présente invention concerne un dispositif perfectionné de désorption du charbon actif.

Dans les procédés de récupération de solvant à l'aide de charbon actif, on régénère ce dernier par traitement à l'aide de vapeur d'eau. La quantité totale de vapeur nécessaire pour désorber le charbon actif est de l'ordre de 3 à 8 kg de vapeur par kilogramme de solvant récupéré.

La vapeur d'eau sortant de l'appareil où a eu lieu la désorption du charbon actif est condensée et admise dans un décanteur où a lieu une démixtion entre l'eau et le solvant lorsque ces deux constituants ne sont pas miscibles. Lorsque le solvant récupéré est miscible avec l'eau, le décanteur est remplacé par un système de séparation approprié tel que distillation, extraction liquide-liquide... Le solvant est récupéré et l'eau peut être recyclée soit, généralement après traitement, dans la chaudière où l'on produit la vapeur, soit au moins en partie, dans le condenseur.

On a déjà signalé l'intérêt d'utiliser des thermocompresseurs (éjecteurs) dans des installations de ce type. Ces thermocompresseurs reçoivent de la vapeur d'eau sous une pression de 8 à 16 bars en provenance de la chaudière ; cette vapeur se détend dans le thermocompresseur et entraîne de la vapeur d'eau (pure ou impure) qui provient du liquide situé dans le condenseur où il a servi de liquide d'échange indirect.

Si l'on étudie le cycle de désorption du charbon actif par la vapeur d'eau, on constate que dans une première phase la vapeur sert à chauffer la masse de charbon actif et pendant cette phase aucun produit ne sort de l'appareil. Puis, dans une deuxième phase, on constate qu'il sorte de l'appareil de désorption un mélange vapeur riche en solvant désorbé qui très souvent présente une température de condensation trop basse pour que la tension de vapeur en résultant soit reprise par le thermocompresseur. Enfin, dans une troisième phase, le mélange sortant de l'appareil de désorption devient de plus en plus riche en eau et de ce fait se condense à une température assez élevée pour que la tension de vapeur qui en résulte soit suffisante pour amorcer l'entraînement de cette vapeur par le thermocompresseur.

Pendant la deuxième phase de la désorption, il est possible d'amorcer le thermocompresseur par un appoint supplémentaire momentané de vapeur. Mais cette solution simple ne semble pas économiquement intéressante.

Il a été trouvé, et c'est là l'objet principal de la présente invention, que l'on pouvait très tôt, dans cette seconde phase de désorption, amorcer le thermocompresseur (éjecteur) en utilisant un second thermocompresseur qui est alimenté en vapeur sous 8 à 16 bars à partir de la chaudière et raccordé sur un condenseur, et qui débite sur l'aspiration du premier thermocompresseur, ledit second thermocompresseur pouvant être court-circuité à la fin de ladite seconde phase de désorption.

De préférence, selon l'invention, ce second thermocompresseur a son aspiration raccordée sur un second condenseur monté en série avec un premier condenseur qui est lui-même relié à l'aspiration du premier thermocompresseur.

L'invention concerne également, de façon subsidiaire, un perfectionnement au dispositif mentionné ci-dessus.

Si l'on étudie le cycle de désorption du charbon actif par la vapeur d'eau, on constate que, dans une première phase, la vapeur sert à chauffer la masse de charbon actif et, pendant cette phase, aucun produit ne sort de l'appareil. Puis, dans une deuxième phase, on constate qu'il sort de l'appareil de désorption un mélange vapeur riche en solvant désorbé qui très souvent présente une température de condensation trop basse pour que la tension de vapeur en résultant soit reprise par le thermocompresseur. Enfin, dans une troisième phase, le mélange sortant de l'appareil de désorption devient de plus en plus riche en eau et de ce fait se condense à une température assez élevée pour que la tension de vapeur qui en résulte soit suffisante pour amorcer l'entraînement de cette vapeur par le thermocompresseur.

Si l'on étudie la situation énergétique du procédé dans ses phases successives, il apparaît que, dans la première phase (phase de chauffage), il est nécessaire d'apporter à l'installation un supplément important de calories, alors que, pendant la troisième phase (et parfois une partie de la deuxième phase), on recueille, à la sortie du condenseur, une vapeur riche en eau dont la température est encore élevée (de l'ordre de 80 à 95°C). Il convient bien entendu de condenser cette vapeur et c'est pourquoi les installations connues comportent soit un second condenseur de même type que le premier, soit un aéroréfrigérant, soit une combinaison dudit second condenseur et dudit aéroréfrigérant.

Le dispositif selon la présente invention est caractérisé en ce que ledit second condenseur contient un caloporteur, constituant ainsi un échangeur-accumulateur, ledit caloporteur étant réchauffé, par échange indirect, par les vapeurs sortant du condenseur lors de la troisième phase du procédé de désorption ; les calories emmagasinées par ledit caloporteur étant restituées, devant la première phase du procédé de désorption, sous forme d'une vapeur provenant de la vaporisation d'un liquide chauffé par ledit caloporteur.

Comme il a été indiqué, le chauffage du caloporteur par les vapeurs sortant du condenseur a lieu pendant la troisième phase du procédé et également, si souhaitable, pendant une partie de la deuxième phase dudit procédé.

L'échangeur-accumulateur est un échangeur indirect qui peut être convenablement court-circuité pendant tout ou partie des deux premières phases du procédé. Le caloporteur est de préférence un composé ou un mélange de composés qui change d'état, ou subit une quelconque réaction réversible, en particulier passe de l'état solide à l'état liquide et vice versa, pendant un cycle ; ainsi, ledit caloporteur se liquéfiera pendant la troisième phase du procédé et se solidifiera pendant la première phase du cycle suivant.

Enfin, la production de vapeur, à partir du caloporteur, s'effectuera de façon simple, de préférence par pulvérisation d'eau sur les éléments contenant le caloporteur.

L'invention sera mieux comprise en se référant aux exemples non limitatifs ci-joints qui illustrent deux modes de mise en oeuvre de l'invention .

La figure 1 représente un schéma d'une installation classique de désorption du charbon actif.

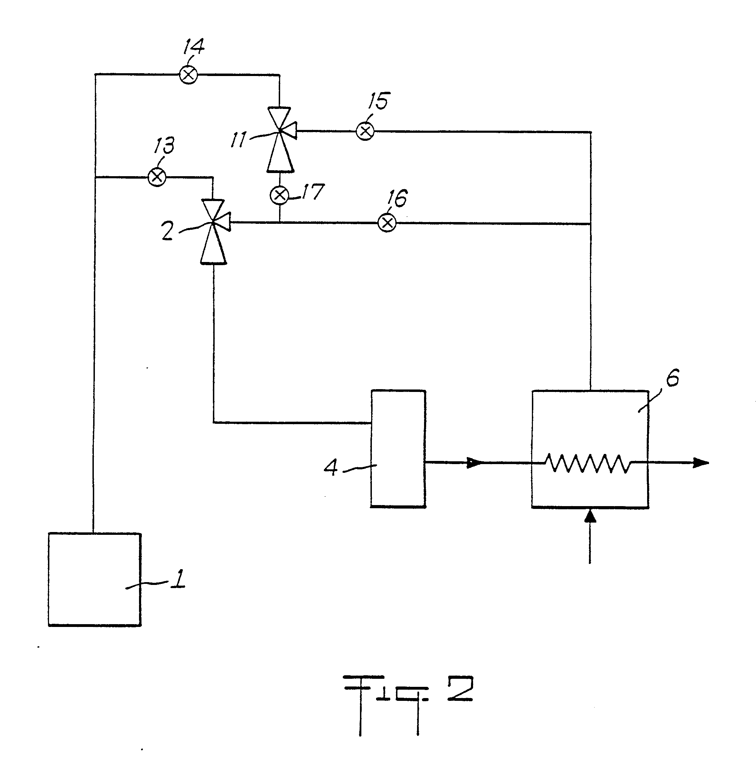

La figure 2 représente un schéma d'une installation de désorption du charbon actif analogue à l'installation de la figure 1 mais munie du dispositif selon la présente invention.

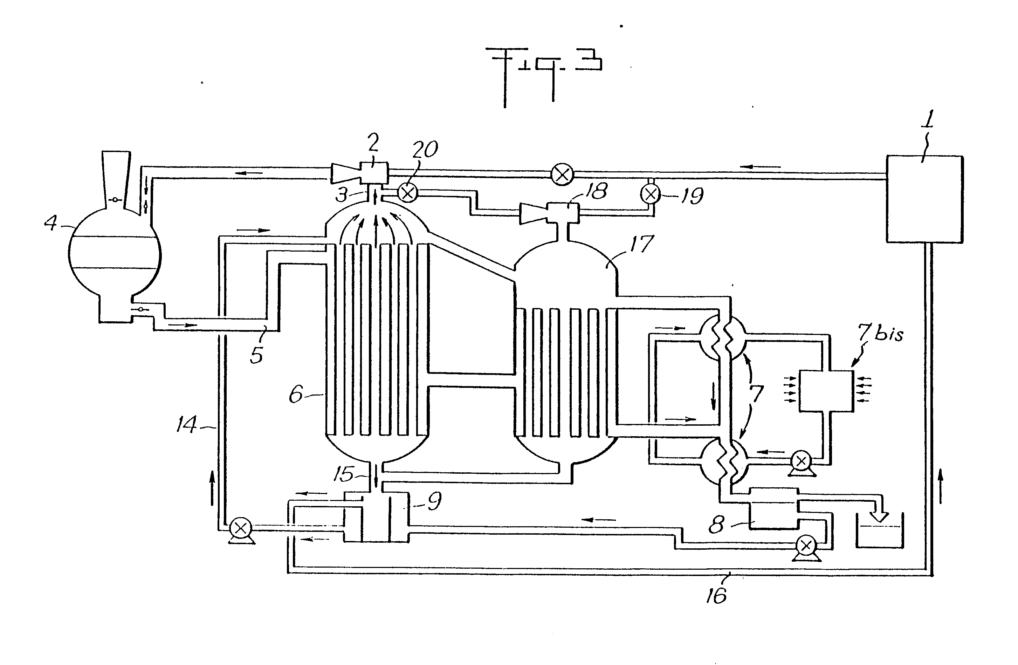

La figure 3 représente le schéma d'une installation perfectionnée dans laquelle on utilise une recirculation de l'eau impure au niveau des condenseurs.

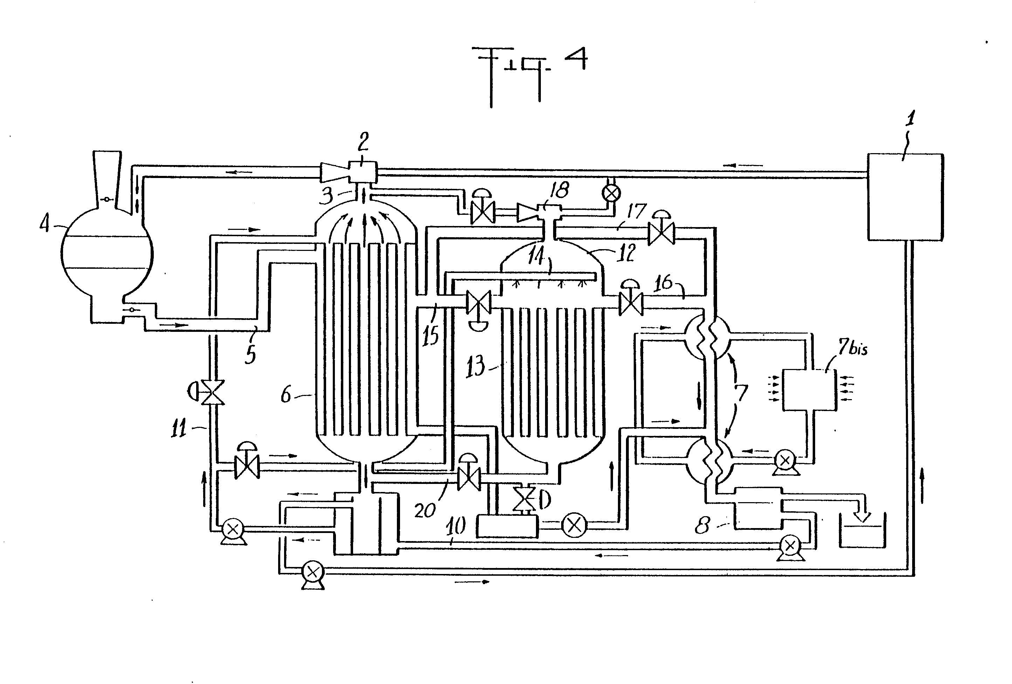

La figure 4 représente le schéma d'une installation, dans laquelle le deuxième condenseur est agencé en échangeur-accumulateur.

Sur le schéma 1, on fait figurer :
-en 1 la chaudière productrice de vapeur, cette chaudière classique produit avantageusement une vapeur sous environ 8 à 16 bars de pression ;
- en 2 un éjecteur dans lequel, en provoquant une détente de 8 à environ 1 à 1,5 bars de la vapeur en provenance de la chaudière, on entraîne de la vapeur à basse pression provenant par la tuyauterie 3 de l'échangeur thermique indirect ;
-en 4 l'adsorbeur : dans cette adsorbeur, le solvant adsorbé sur le charbon actif est désorbé par de la vapeur d'eau provenant de l'éjecteur 2. Les distillats (mélange de vapeur d'eau et de vapeur de solvant) sortent de cet adsorbeur par la canalisation 5.

Les vapeurs sortant de l'adsorbeur par la canalisation 5 sont admises dans un échangeur thermique indirect 6 qui peut être avantageusement du type à film liquide à bon coefficient d'échange.

Dans cet échangeur, les vapeurs provenant de 5 sont utilisées pour vaporiser l'eau impure admise par ailleurs dans ledit échangeur. Pour assurer cette vaporisation, on doit opérer sous un vide partiel de sorte que la pression de la vapeur sortant de l'échangeur thermique indirect 6 est comprise entre 0,1 et 1 bar et de préférence entre 0,5 et 0,8 bar ; ce vide partiel est bien évidemment assuré par l'éjecteur 2.

Les distillats provenant de 5 et non utilisés dans l'échangeur 6 finissent de se condenser dans un condenseur réfrigérant indirect 7 et le liquide refroidi obtenu est admis dans le décanteur 8 où, par simple décantation, il se forme une couche de solvant que l'on évacue et une couche d'eau impure, c'est-à-dire une eau qui, du fait qu'elle contient encore une certaine proportion de solvant, est impropre pour une utilisation directe dans la chaudière 1.

L'eau impure provenant du décanteur est stockée dans un bac de stockage 9.

L'eau impure provenant du bac de stockage 9 est renvoyée, au moins pour partie, à l'échangeur thermique indirect par la canalisation 10 ; mais ladite eau peut également être renvoyée à la chaudière 1 après traitement si nécessaire.

Sur le schéma 2, on a fait seulement figurer les dispositifs 1 (chaudière), 2 (thermocompresseur, c'est-à-dire éjecteur), 4 (désorbeur du charbon actif), 6 (échangeur thermique indirect) et on y a ajouté le dispositif selon l'invention, à savoir :
-un second thermocompresseur (injecteur) 11 qui est alimenté à travers la vanne 14 par de la vapeur en provenance de la chaudière 1 et qui aspire à travers la vanne 15 la vapeur située dans l'échangeur 6 ; ce second injecteur est relié par l'intermédiaire de la vanne 17 avec l'aspiration du premier injecteur 2. Lorsque le second thermocompresseur 11 est en fonctionnement, les alimentations du premier thermocompresseur en provenance de la chaudière et de l'échangeur sont coupées grâce aux vannes 13 et 16.

Sur le schéma 3, on a représenté un dispositif perfectionné comprenant :
-une chaudière à vapeur 1,
-un éjecteur 2 alimenté à partir de la chaudière et aspirant la vapeur provenant de l'échangeur indirect 6,
-le désorbeur 4 à charbon actif,
-l'échangeur indirect 6,
-un autre échangeur indirect 7, alimenté par un aéroréfrigérant 7 bis,
-un bac de décantation (décanteur) 8,
-un bac de stockage 9 qui reçoit l'eau impure provenant du décanteur 8 et qui, par l'intermédiaire de la tuyauterie 14, envoie cette eau au haut de l'échangeur indirect 6,

-en 15 un retour d'eau purifiée provenant de léchangeur 6, cette eau purifiée est renvoyée par la canalisation 16 à la chaudière 1.

Selon l'invention, la vapeur provenant du désorbeur 4 et passant dans l'échangeur 6 pénètre ensuite dans un deuxième échangeur indirect 17 ; ce deuxième échangeur est branché sur l'aspiration d'un deuxième éjecteur 18 qui lui-même est alimenté à travers la vanne 19 par de la vapeur provenant de la chaudière, la sortie de ce deuxième éjecteur étant branchée sur l'aspiration du premier éjecteur 2 par l'intermédiaire de la vanne 20.

Sur la figure schématique 4, on a représenté :
-la chaudière 1,
-un éjecteur 2 alimenté à partir de la chaudière et des vapeurs 3 provenant d'un condenseur 6,
-un adsorbeur-désorbeur 4,
-une canalisation 5 conduisant les vapeurs du désorbeur 4 au condenseur 6,
-un condenseur réfrigérant indirect 7 (alimenté ici par son aéroréfrigérant 7 bis),
-un décanteur 8,
-un recyclage d'eau impure en provenance du décanteur par la canalisation 10 débouchant dans le pot 9 ; par la canalisation 11,1e liquide du pot 9 est envoyé en tête du condenseur 6 ; de plus, on a représenté,selon l'invention,
-en 12 un échangeur-accumulateur ; cet échangeur-accumulateur comporte à titre d'exemple de réalisation des tubes verticaux parallèles 13 contenant un matériau caloporteur (par exemple un sel fondant à une température de l'ordre de 80 à 90°C) et une rampe 14 de pulvérisation de liquide, ledit liquide étant de l'eau pure ou une eau impure prélevée sur la canalisation 11 par exemple ; ledit échangeur-accumulateur peut être alimenté en vapeur provenant du condenseur 6 par la canalisation 15 comportant une vanne ; les vapeurs sortent par la canalisation 16 également munie d'une vanne ; les vannes situées sur les canalisations 15 et 16 servent à isoler l'échangeur 12, celui-ci étant alors court-circuité par la canalisation 17 ; les condensats provenant de l'échangeur 12 sont recyclés par la canalisation 20 et les vapeurs produites sont envoyées à l'éjecteur 18.

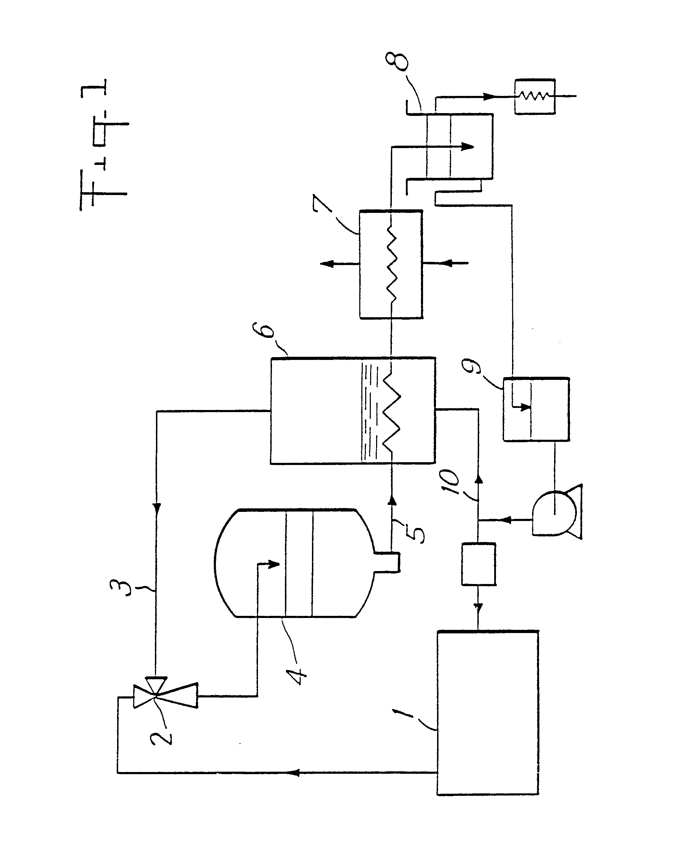

L'avantage essentiel du dispositif selon l'invention est le suivant :
-dans une installation de récupération de solvant comme connue il y a quelques années la consommation de vapeur, par kilogramme de solvant extrait du charbon actif, était de l'ordre de 3 à 4 kg,
-dans une installation telle que représentée sur la figure 1, éventuellement améliorée par l'utilisation de deux éjecteurs en série, ladite consommation de vapeur pouvait être abaissée jusqu'à être de l'ordre de 1,5 à 2,5 kg,
-par la mise en oeuvre de la présente invention, ladite consommation de vapeur peut être abaissée jusqu'à être comprise entre 0,5 et 1,5 kg.

## Revendications

1. Dispositif perfectionné de traitement de charbon actif comportant un appareil de désorption (4), un condenseur (6), un décanteur (8), un dispositif de recirculation de l'eau provenant dudit décanteur, impliquant l'introduction de ladite eau dans ledit condenseur et l'aspiration de la vapeur produite dans ledit condenseur au moyen d'un thermocompresseur (2) avec introduction de ladite vapeur dans l'appareil de désorption (4), ledit dispositif étant caractérisé en ce qu'il comporte un second thermocompresseur (11-18) alimenté en vapeur à partir de la chaudière (1) fournissant ladite vapeur et qui est branché sur un condenseur (6-17) et qui débite sur l'aspiration dudit thermocompresseur (2), ledit second thermocompresseur pouvant être court-circuité au cours d'une phase de l'opération de désorption.

2. Dispositif selon la revendication 1, caractérisé en ce que ledit second thermocompresseur est alimenté à partir d'un second condenseur indirect (17) monté en série avec le premier condenseur (6).

3. Dispositif selon la revendication 1, caractérisé en ce que ledit second thermocompresseur est alimenté à partir d'un échangeur-accumulateur (12) contenant un caloporteur et une rampe de pulvérisation (14).

Fig. 1

0 237 685

Fig. 2

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 631 225 (LABORATORIUM FÜR ADSORPTIONSTECHNIK) | | B 01 D 53/04<br>B 01 J 20/34<br>C 01 B 31/08 |
| | --- | | |
| A | FR-A-2 307 567 (LINDE) | | |
| | --- | | |
| A | FR-A-2 464 744 (CEAG VERFAHRENSTECHNIK) | | |
| | ----- | | |

| DOMAINES TECHNIQUES RECHERCHES (Int. Cl.4) |
|---|
| B 01 D 53/00<br>B 01 J 20/00<br>C 01 B 31/00 |

Le présent rapport de recherche a été établi pour toutes les revendications

| Lieu de la recherche | Date d'achèvement de la recherche | Examinateur |
|---|---|---|
| LA HAYE | 18-11-1986 | BOGAERTS M.L.M. |